# EUROPÄISCHE PATENTSCHRIFT

(11) **EP 0 795 205 B1**
(45) Veröffentlichungstag und Bekanntmachung des Hinweises auf die Patenterteilung: **07.10.1998**
(21) Anmeldenummer: 95937776.3
(22) Anmeldetag: 17.11.1995
(51) Int. Cl.: H01M 8/24, H01M 8/02

(54) **BRENNSTOFFZELLEN UND DARAUS HERGESTELLTE BATTERIEN**
FUEL CELLS AND BATTERIES MADE THEREOF
CELLULES ELECTROCHIMIQUES ET BATTERIES CONSTITUEES DE CELLES-CI

(30) Priorität: 28.11.1994 DE 4442285
(43) Veröffentlichungstag der Anmeldung: 17.09.1997
(73) Patentinhaber: SIEMENS AKTIENGESELLSCHAFT, 80333 München (DE)
(72) Erfinder: GRÜNE, Horst, D-91341 Röttenbach (DE); BUCHNER, Peter, D-91332 Heiligenstadt (DE); NEUMANN, Georg, D-91154 Roth (DE)
(86) Internationale Anmeldenummer: DE9501603
(87) Internationale Veröffentlichungsnummer: WO9617396

(56) Entgegenhaltungen:
- EP-A- 0 329 161
- EP-A- 0 397 072
- US-A- 3 573 104
- PATENT ABSTRACTS OF JAPAN vol. 010 no. 367 (E-462) ,9.Dezember 1986 & JP,A,61 161671 (HITACHI LTD) 22.Juli 1986,
- PATENT ABSTRACTS OF JAPAN vol. 011 no. 367 (E-561) ,28.November 1987 & JP,A,62 139271 (HITACHI LTD) 22.Juni 1987,
- EXTENDED ABSTRACTS THE NETHERLANDS 26-29 OCTOBER 1987, Seiten 209-218, T. G. BENJAMIN ET AL 'INTERNAL MANIFOLDING IN MOLTEN CARBONATE FUEL CELLS'
- PATENT ABSTRACTS OF JAPAN vol. 012 no. 158 (E-608) ,13.Mai 1988 & JP,A,62 272469 (HITACHI LTD) 26.November 1987,
- PATENT ABSTRACTS OF JAPAN vol. 013 no. 092 (E-722) ,3.März 1989 & JP,A,63 269458 (SHIN KOBE ELECTRIC MACH CO LTD) 7.November 1988,

## Beschreibung

Die Erfindung betrifft Brennstoffzellen, die jeweils eine negative Polplatte, eine negative Elektrode, eine Membran, eine positive Elektrode und eine positive Polplatte mit je mindestens vier durchgehenden Versorgungs- bzw. Entsorgungs-Öffnungen aufweisen, sowie aus derartigen Brennstoffzellen bestehende Batterien.

Wasserstoff/Sauerstoff- bzw. Wasserstoff/Luft-Brennstoffzellen liefern eine Spannung von ca. 1 V. Da diese Spannung für praktische Anwendungen viel zu niedrig ist, müssen zahlreiche Einzelzellen elektrisch in Serie geschaltet werden, um beispielsweise die zum Betrieb von Motoren oder elektronischen Anlagen erforderliche Spannung zu erhalten. Die durch die Verschaltung gebildete Gesamtheit der Einzelzellen wird als Brennstoffzellenbatterie ("fuel cell stack") bezeichnet.

Es ist bekannt und üblich, derartige Batterien in der Weise herzustellen, daß die einzelnen Komponenten der Brennstoffzellen wiederholt aufeinandergestapelt und durch Schraubenbolzen oder andere Spannvorrichtungen mechanisch miteinander verbunden werden. So ist es beispielsweise auch bekannt, die dafür erforderlichen Kräfte hydraulisch oder pneumatisch zu erzeugen, was nach Art der sogenannten Filterpressentechnik erfolgt (siehe beispielsweise: W. Vielstich "Brennstoffelemente", Verlag Chemie GmbH, 1965, Seiten 171 und 201/202). Durch die mechanische Verspannung der Batterie werden gleichzeitig die gesamten Ränder der einzelnen Brennstoffzellen und die erforderlichen Durchführungen für die Betriebsgase sowie gegebenenfalls für ein Kühlmittel abgedichtet. Dabei müssen folgende Medienpaare durch Dichtungen zuverlässig voneinander getrennt werden: Wasserstoff/Sauerstoff (Luft), Wasserstoff/-Umgebung, Sauerstoff/Umgebung und Elektrolyt/Umgebung sowie bei Verwendung eines Kühlmittels auch Wasserstoff/Kühlmittel und Sauerstoff/Kühlmittel. Bei Verwendung eines flüssigen Kühlmittels ist dieses auch gegen die Umgebung abzudichten. Bei Verwendung von Luft als Kühlmittel ist dagegen ein möglichst wenig behinderter Austausch mit der Umgebung erwünscht.

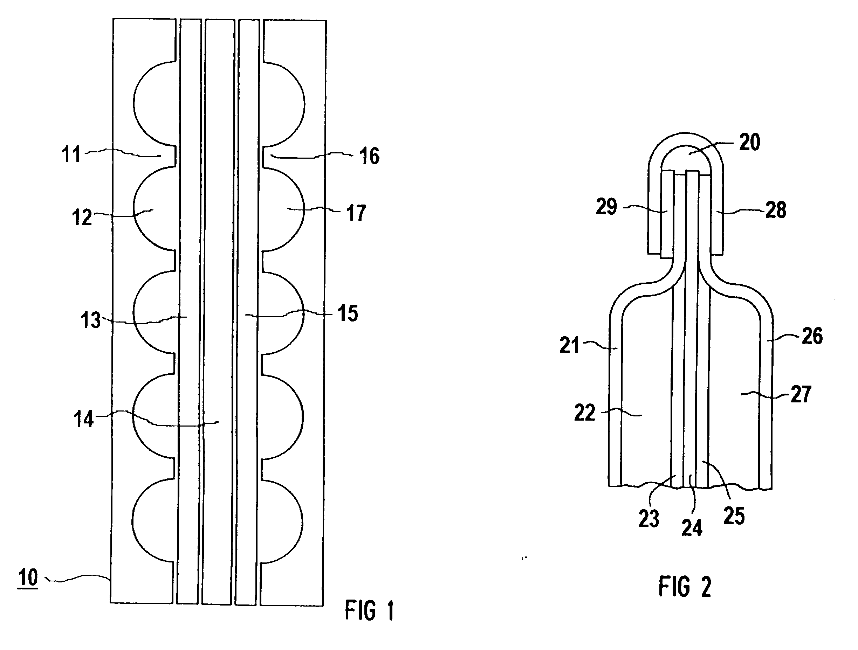

Die wesentlichen Komponenten einer Brennstoffzelle sind - in der Reihenfolge des Zusammenbaus - folgende (siehe dazu Figur 1): eine den negativen Pol der Einzelzelle (10) bildende elektronische Kontaktplatte (11) mit Einrichtungen (Kanäle bzw. Bohrungen) für die Verteilung von Wasserstoff (12), eine poröse Wasserstoffelektrode (13), ein poröser Elektrolyttrager (14), eine poröse Sauerstoff- bzw. Luftelektrode (15) und eine den positiven Pol der Einzelzelle bildende elektronisch leitende Kontaktplatte (16) mit Einrichtungen (Kanäle bzw. Bohrungen) für die Verteilung von Sauerstoff oder Luft (17). Der poröse Elektrolyttrager (14) wird vor oder nach dem Zusammenbau mit einem flüssigen Elektrolyt getränkt. Als poröser Elektrolyttrager kann insbesondere aber auch eine Ionenaustauschermembran verwendet werden. Damit ausgestattete Brennstoffzellen, sogenannte PEM-Brennstoffzellen (PEM = Proton Exchange Membrane bzw. Polymer-Elektrolyt-Membran), werden als besonders aussichtsreiche Energiequelle für einen Kfz-Antrieb angesehen (siehe beispielsweise: VDI-Berichte Nr. 912 (1992), Seiten 125 bis 145).

Bei den bislang bekannten Brennstoffzellenbatteriekonstruktionen gibt es einzelne Kontaktplatten (11 und 16) jeweils nur am positiven bzw. am negativen Ende der Batterie. Die innerhalb der Batterie befindlichen Kontaktplatten sind zu sogenannten bipolaren Platten zusammengefaßt, die oft hohl ausgestaltet sind. Derartige Kontaktplatten können von einem Kühlmittel durchströmt werden und werden dann auch als Kühlplatten bezeichnet. Bipolare Platten sind somit ein typisches Element der bekannten Batteriekonstruktionen.

Von den vorstehend genannten Dichtstellen ist die Trennung von Wasserstoff und Sauerstoff bei weitem am kritischsten. Bei einer fehlerhaften Dichtung kann nämlich Wasserstoff an die Sauerstoff- bzw. Luftelektrode oder Sauerstoff (Luft) an die Wasserstoffelektrode gelangen. In beiden Fällen bilden sich brennbare Gasgemische, die mit hoher Wahrscheinlichkeit durch die Elektrodenmaterialien katalytisch gezündet werden, was zu einer Zerstörung der gesamten Batterie führen kann. Aus Sicherheitsgründen sollten daher die Zellen bzw. Batterien so konstruiert sein, daß eine direkte Abdichtung Wasserstoff/Sauerstoff (Luft) vermieden wird. Bei einer in dieser Hinsicht richtig konstruierten Zelle treten Wasserstoff und Sauerstoff bei einem Dichtungsdefekt stets in die Umgebung aus. Wenn dort keine Zündquelle vorhanden ist, ist somit keine Gefährdung gegeben. Dies kann bei der Filterpressentechnik für die Randabdichtung zwar in der Weise erreicht werden, daß die Membranen bis an die umgebende Atmosphäre heranreichen, dann besteht aber die Gefahr, daß die Membranen über den Rand austrocknen, was zu erheblichen Korrosionsproblemen und - nach längeren Stillstandszeiten - auch zu Betriebsproblemen führen kann. Das geschilderte Dichtungsproblem tritt im übrigen nicht nur an den Rändern der Zellen auf, sondern auch an den Stoffdurchführungen von Zelle zu Zelle.

Ein wesentlicher Nachteil der Filterpressentechnik besteht ferner darin, daß an die Randabdichtungen hinsichtlich der Maßtoleranzen sehr hohe Anforderungen gestellt werden müssen bzw. daß nur hochelastische Werkstoffe eingesetzt werden können, die aufwendige Verarbeitungsverfahren erfordern und auch zahlreiche andere Nachteile besitzen. Nachteilig bei dieser Technik ist ferner, daß sämtliche Dichtflächen gleichzeitig beim Zusammenbau der Batterie hergestellt werden. Beim Auftreten von Dichtungsfehlern ist deren Lokalisierung deshalb nur mit Hilfe von speziellen Verfahren möglich. Bei der Filterpressentechnik können außerdem nur relativ kleine Anschlußquerschnitte für die Versorgung der Einzelzellen mit Reaktanten und Kühlmittel realisiert werden. Insbesondere die für eine Luftkühlung erforderlichen weiten Strömungskanäle sind kaum herstellbar. Bei einer Flüssigkeitskühlung kann andererseits die elektrochemische Korrosion bei den hohen geforderten Batteriespannungen von beispielsweise 200 V kaum oder nur mit sehr aufwendigen Maßnahmen beherrscht werden.

Aufgabe der Erfindung ist es, Brennstoffzellen der eingangs genannten Art - mit einer negativen Polplatte, einer negativen Elektrode, einer Membran, einer positiven Elektrode und einer positiven Polplatte - derart auszugestalten, daß eine Großserienfertigung ermöglicht wird, insbesondere zur Herstellung von Niedertemperatur-Brennstoffzellenbatterien für den Elektroantrieb von Kraftfahrzeugen. Dabei sollen vor allem die mit der bislang verwendeten Filterpressentechnik verbundenen Probleme vermieden werden.

Dies wird erfindungsgemäß dadurch erreicht, daß die negative Polplatte, die Membran und die positive Polplatte am Rand durch ein Rahmenelement mechanisch fest, gasdicht und elektronisch isolierend miteinander verbunden sind, wobei kein zusätzliches Dichtmaterial vorhanden ist. Die beiden Polplatten, die beiden Elektroden und die Membran bilden somit eine abgeschlossene, handhabbare Einheit.

Neben Brennstoffzellen betrifft die Erfindung auch Batterien, die aus einem Stapel von mehreren mechanisch miteinander verbundenen Brennstoffzellen der vorstehend genannten Art bestehen, wobei diese Zellen elektrisch in Serie geschaltet sind.

Die vorliegende Erfindung ermöglicht die Herstellung von randdichten, einzeln betreib- und prüfbaren Brennstoffzellen, wobei von Vorteil ist, daß dies durch schnelle Fertigungsvorgänge, wie Prägen und Stanzen, erfolgen kann. Von Vorteil ist ferner, daß eine Vermischung der Betriebsgase innerhalb der Zellen - aufgrund fehlerhafter Dichtstellen - nicht möglich ist. Beliebig viele der Einzelzellen können zu Batterien gestapelt werden, wobei sich die erforderlichen Zwischendichtungen von selbst ergeben, d.h. zusätzliche Dichtungsmaterialien sind nicht erforderlich.

Der Gegenstand der Erfindung kann besonders vorteilhaft bei PEM-Brennstoffzellen und entsprechenden Batterien Anwendung finden; der Elektrolyttrager wird deshalb im Rahmen der vorliegenden Patentanmeldung vereinfacht als Membran bezeichnet. Die Erfindung ist aber nicht auf diesen Zell- bzw. Batterietyp beschränkt, sondern sie kann auch bei anderen Typen zum Einsatz gelangen, beispielsweise bei alkalischen Wasserstoff/Sauerstoff-Matrixzellen und bei Methanol/Luft-Zellen bzw. den entsprechenden Batterien.

Im einzelnen bieten die Brennstoffzellen und Batterien nach der Erfindung, insbesondere im Vergleich mit nach der Filterpressentechnik aufgebauten Zellen und Batterien, folgende Vorteile:
- Das Problem der gleichzeitigen sicheren Verhinderung von direkten Gaskurzschlüssen und der Austrocknung der Membranen wird auf einfache Weise gelöst.
- Bei Batterien treten keine Dichtungsprobleme an den Stoffdurchführungen von Zelle zu Zelle auf.
- Die Dickentoleranz der einzelnen Bauteile der Brennstoffzellen und Batterien ist völlig unkritisch, und zu deren Aufbau werden auch keine hochelastischen Werkstoffe benötigt. Außerdem sind - neben den Membranen - keine zusätzlichen Dichtungsmaterialien erforderlich.
- Bei den Batterien sind sämtliche Dichtungsstellen von außen direkt zugänglich, so daß Undichtigkeiten leicht lokalisiert werden können, beispielsweise mit Hilfe von Seifenschaum. Außerdem können die Randdichtungen der Zellen bereits vor der Batteriemontage überprüft und schadhafte Zellen deshalb frühzeitig ausgesondert werden. Da - im Gegensatz zum Aufbau nach der Filterpressentechnik - bereits vor der Batteriemontage funktionsfähige Zellen vorliegen, sind auch andere Funktionsprüfungen bereits an Einzelzellen möglich, so daß die Qualitätsprüfung wesentlich vereinfacht wird.
- Die Batterien können in einer Form hergestellt werden, die eine gleichmäßige Umspülung der einzelnen Zellen mit Kühlluft ermöglicht, wobei die Strömungswiderstände beispielsweise ähnlich gering gehalten werden können wie bei modernen Kraftfahrzeugkühlern. Obwohl die Batterien nach der Erfindung besonders vorteilhaft für die Anwendung einer direkten Luftkühlung geeignet sind, kann aber auch eine Flüssigkeitskühlung erfolgen.

Die Brennstoffzellen nach der Erfindung weisen keine bipolaren Platten auf. Bei diesen Zellen bilden die verschiedenen Elemente jeweils eine Einzelzelle und stellen deshalb bereits eine voll funktionsfähige Einheit dar. Wie in Figur 2 - in vereinfachter Form - schematisch im Querschnitt dargestellt, sind dies folgende Elemente: negative Polplatte (21), Gasraum (22), negative Elektrode (23), Membran (24), positive Elektrode (25), positive Polplatte (26) und Gasraum (27). Der Zusammenhalt dieser Elemente wird jeweils durch ein Rahmenelement (28) bewirkt, das den gesamten Rand einer Zelle umspannt.

Die Rahmenelemente können aus einem Stück bestehen, sie können beispielsweise aber auch aus vier Teilen zusammengesetzt sein, wobei jeweils ein Teil eine Kante einer rechteckigen oder quadratischen Zelle umspannt. Vorzugsweise besitzt das Rahmenelement einen U-Profil-Querschnitt, wobei die beiden U-Schenkel die negative Polplatte (21), die Membran (24) und die positive Polplatte (26) am Rand so zusammenpressen, daß das Zellinnere gasdicht von der Umgebung abgeschlossen wird. Durch das U-Profil wird auch verhindert, daß größere Mengen an Feuchtigkeit aus dem Randbereich in die Umgebung verdunsten. Dadurch ist auch nach längeren Stillstandszeiten eine problemlose Wiederinbetriebnahme gewährleistet, und die Gefahr einer Spaltkorrosion an den Polplatten ist ausgeschlossen. Würde nämlich Wasser dampfförmig in die Umgebung entweichen, so konnten sich Säuren geringer Konzentration, die dort praktisch immer vorhanden sind, aufkonzentrieren und im Dichtungsspalt die Polplatten (21 und 26) anätzen. Die vorliegende Erfindung ermöglicht somit auch die Verwendung von weniger korrosionsfesten und damit billigen Werkstoffen.

Ein wesentlicher Vorteil der Brennstoffzellen nach der Erfindung gegenüber allen bekannten Konstruktionen ist ferner, daß jede Zelle eine eigene Randabdichtung besitzt, d.h. die Eigenschaften der im Batterieverband benachbarten Zellen können in keiner Weise die Güte und Zuverlässigkeit der Dichtung beeinflussen. Bei der Filterpressentechnik dagegen müssen die Randdichtungskräfte von einem Ende der Batterie bis zum anderen durchgehend übertragen werden. Die Dickenabweichungen der Bauteile (Kontaktplatten und Membranen) addieren sich dabei und können, insbesondere bei Batterien mit sehr vielen Zellen, leicht zu einer unzulässig hohen Gesamttoleranz führen, so daß eine Randabdichtung nicht mehr möglich ist. Bei der autonomen Randabdichtung nach der Erfindung bestehen dagegen - hinsichtlich der Dickentoleranzen - keine Anforderungen, die über die von handelsüblichen Halbzeugen (Bleche, Membranen) ohnehin zu erfüllenden Forderungen hinausgehen.

Bei den Brennstoffzellen nach der Erfindung übernimmt das Rahmenelement (28) keinerlei Dichtungsfunktionen. Dies ist sogar unerwünscht, denn bei einer fehlerhaften Abdichtung sollen die unter Überdruck stehenden Betriebsgase in die Umgebung entweichen können. Dies kann dadurch erreicht werden, daß die einzelnen Teile des Rahmens nicht völlig dicht aneinandergefügt werden; auf diese Weise kann außerdem die Fertigung vereinfacht werden.

Die Elektroden (23) und (25) sollen die Membran (24) an sich nur bis zum Dichtbereich innerhalb des U-Profils überdecken. Eine weiterreichende Abdeckung ist jedoch dann akzeptabel, wenn die porösen Elektroden im Randbereich vor dem Zusammenbau oder durch die Dichtkräfte selbst verdichtet werden. Dadurch ergibt sich eine erhebliche Vereinfachung des Membran/-Elektroden-Herstellungsprozesses, da bei der Beschichtung der Membran mit Elektrodenmaterial keine Masken erforderlich sind.

Das Rahmenelement (28) darf die negative Polplatte (21) mit der positiven Polplatte (26) nicht elektronisch leitend verbinden, da dies einen Kurzschluß der energieliefernden Zelle bewirken würde. Es kann daher aus einem isolierenden Material hergestellt sein, beispielsweise aus Kunststoff. Vorteilhaft kann das Rahmenelement (28) jedoch aus Metall bestehen, wobei dann zusätzlich eine elektronisch isolierende Schicht vorhanden ist; diese elektronisch isolierende Schicht kann als Beschichtung des Rahmenelementes ausgebildet sein. Eine bevorzugte Möglichkeit besteht darin, daß zumindest eine der Polplatten (21 oder 26) am Rand an der Außenseite der Zelle eine elektronisch isolierende Schicht (29) aufweist, die als Beschichtung der Polplatte ausgebildet sein kann. Die Materialanforderungen an die Isolation werden von den meisten Kunststoffen erfüllt, da auch hier keine Dichtfunktion verlangt wird. Das U-Profil, d.h. das Rahmenelement (28), kann dann aus einem Metallblech hergestellt werden, was wegen der besseren Feder- und Festigkeitseigenschaften vorzuziehen ist. Das Rahmenelement (28) kann vorteilhaft aber auch in der weise ausgestaltet sein, daß eine Polplatte größer ist als die andere und der überstehende Rand bei der Zellmontage um den Rand der anderen Polplatte gefalzt wird; auch Bordelungen ergeben sichere mechanische Verbindungen. Das Rahmenelement ist somit quasi Bestandteil einer der beiden Polplatten, wobei aber eine geeignete Isolierung vorhanden sein muß.

Vorteilhaft ist das Rahmenelement (28) derart ausgestaltet, daß im Inneren des U-Profils ein kleiner Hohlraum (20) verbleibt. Dieser Hohlraum dient im Falle eines Dichtungsdefektes zur Ableitung der unter Überdruck stehenden Betriebsgase in die Umgebung, d.h. als Gasableitkanal. Auf diese Weise wird gewährleistet, daß ein Reaktionsgas nicht unter die andere Polplatte gelangen kann, d.h. in den Gasraum des anderen Reaktionsgases. Als Material für die Polplatten sind Kohlewerkstoffe geeignet, beispielsweise Folien aus Graphit. Vorteilhaft dienen als Polplatten Metallbleche, insbesondere mit einer Dicke zwischen 0,05 und 0,2 mm, vorzugsweise mit einer Dicke von ca. 0,1 mm.

Nachfolgend wird beispielhaft eine praktisch ausgeführte Zelle mit aus Blechen geprägten Polplatten beschrieben. Die Erfindung ist jedoch nicht auf derartige Polplatten beschränkt, und auch die geschilderte Führung der Stoffströme kann in anderer Weise erfolgen.

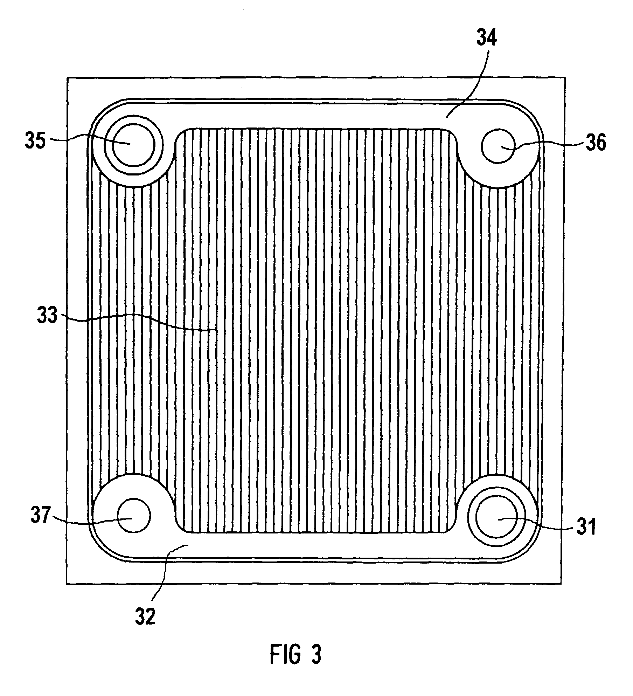

Zur Herstellung von Polplatten werden Bleche aus rostfreiem Stahl mit einer Dicke von 0,1 mm in der Weise geprägt und gestanzt, daß sich eine Form entsprechend Figur 3 ergibt, in der eine Draufsicht auf die Innenseite einer Polplatte dargestellt ist. Die negativen und die positiven Polplatten sind gleich aufgebaut.

Beim Betrieb einer Zelle strömt ein Reaktionsgas, beispielsweise Wasserstoff oder ein wasserstoffhaltiges Gasgemisch, über eine Versorgungsöffnung (31) in der Polplatte, die dann die negative Polplatte ist, in den entsprechenden Gasraum ein, wobei es über einen relativ weiten Versorgungskanal (32) und relativ enge Verteilungskanale (33) jeden Punkt der Elektrode erreicht. Während das Reaktionsgas umgesetzt wird, reichern sich inerte Anteile an und verlassen den Gasraum über einen Sammelkanal (34) und eine Entsorgungsöffnung (35). Die Polplatte weist ferner Durchführungsöffnungen (36 und 37) auf. In entsprechender Weise erfolgt auch die Versorgung einer Zelle mit Sauerstoff bzw. Luft über eine positive Polplatte.

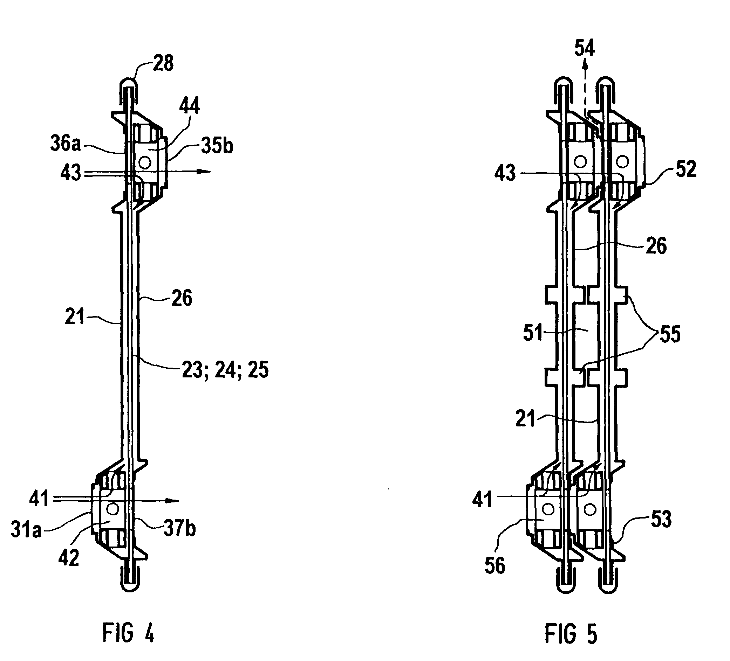

Zum Aufbau einer Einzelzelle werden eine negative Polplatte (21) und eine positive Polplatte (26) in der Weise mit den Elektroden (23 und 25) und der Membran (24) zusammengefügt, wie dies schematisch im Querschnitt in Figur 4 dargestellt ist, wobei die Innenseiten (der Polplatten) zueinander zu liegen kommen; der mechanische Verbund erfolgt mittels des Rahmenelementes (28). Der Wasserstoff tritt bei (41) über die erhaben ausgebildete Versorgungsöffnung (31a) der negativen Polplatte (21) in die Zelle ein. Er durchströmt einen Stützring (42) mit einer achsialen Bohrung und mehreren radialen Bohrungen. Ein Anteil des Wasserstoffs verläßt die Zelle achsial über eine Öffnung in der Membran und die Durchführungsöffnung (37b) der positiven Polplatte (26) und kann zur Versorgung weiterer Zellen dienen. Ein Teilstrom erreicht über die Radialbohrungen das Kanalsystem der negativen Polplatte (21).

Auf entsprechende Weise erfolgt die Sauerstoffversorgung. Der Sauerstoff tritt bei (43) über die Durchführungsöffnung (36a) der negativen Polplatte (21) und eine Öffnung in der Membran in die Zelle ein und durchströmt einen Stützring (44) in der erhaben ausgebildeten Entsorgungsöffnung (35b) der positiven Polplatte (26). Der Stützring (44) weist ebenfalls eine axiale Bohrung und mehrere radiale Bohrungen auf.

Das Entsorgungssystem der Zellen ist in entsprechender Weise aufgebaut wie das Versorgungssystem (siehe dazu Figur 3: "a" kennzeichnet Merkmale der negativen Polplatte, "b" Merkmale der positiven Polplatte). Zu diesem Zweck dienen einerseits, d.h. für den Wasserstoff, die Entsorgungsöffnung (35a) in der negativen Polplatte (21) und die Durchführungsöffnung (36b) in der positiven Polplatte (26) und andererseits, d.h. für den Sauerstoff, die Durchführungsöffnung (37a) in der negativen Polplatte (21) und die Entsorgungsöffnung (31b) in der positiven Polplatte (26). Dazu werden zwei weitere Stützringe benötigt, jeweils in den erhaben ausgebildeten Öffnungen (35a) und (31b). Im übrigen ist es gleichgültig, ob die Versorgung und die Entsorgung der Zellen von der rechten oder von der linken Seite her erfolgt, d.h. die Versorgungs- und Entsorgungsöffnungen können auch als Durchführungsöffnungen benutzt werden und umgekehrt.

Die Stützringe können aus Metall oder Kunststoff bestehen. Die Herstellung wird besonders einfach und billig, wenn sie aus je einer ebenen, einer gewellten und einer weiteren ebenen Unterlegscheibe zusammengesetzt werden. Diese Form ermöglicht extrem kleine Strömungswiderstände bei gleichzeitig geringer Bauhöhe. Der Wirkungsgrad der Gesamtanlage wird somit durch innere Druckabfälle kaum beeinträchtigt, was andernfalls insbesondere bei Luftbetrieb kritisch sein kann.

Die Zellfläche kann auch rechteckig ausgebildet sein oder eine kompliziertere Form besitzen. Die Gasverteilung im Inneren der Zellen kann auch durch andere Maßnahmen bewirkt werden als durch eingeprägte Kanäle, beispielsweise durch eingelegte Hindernisse, wie Netze und Siebe. Auch können die negative Polplatte und die positive Polplatte unterschiedlich geformt sein. Die beiden Reaktionsgase können in beliebiger Weise zueinander geführt werden, beispielsweise im Gegen-, Parallel- oder Kreuzstrom.

Die Brennstoffzellen nach der Erfindung dienen zum Aufbau von Batterien. Durch Stapelung der Zellen ergeben sich eine elektrische Serienschaltung und gleichzeitig gemeinsame gasdichte Versorgungs- und Entsorgungssysteme. Auch hierbei werden die Forderungen erfüllt, daß keine zusätzlichen Dichtungsmaterialien verwendet werden müssen und daß auch im Falle einer fehlerhaften Dichtstelle keine Vermischung der beiden Betriebsgase innerhalb einer der Polplatten erfolgen darf.

Die negative und die positive Polplatte sind an den Außenseiten vorteilhaft in der Weise mit einander entsprechenden Erhöhungen und Vertiefungen versehen, daß bei der Stapelung der Zellen deren Lage zueinander fixiert ist. Vorzugsweise sind die Polplatten in der unmittelbaren Umgebung der Versorgungs- und Entsorgungsöffnungen geometrisch in der Weise ausgebildet, daß sich bei der Stapelung zweier Zellen - zusammen mit der Membran einer der beiden Zellen - jeweils zwei ringförmige konzentrische Dichtbereiche ergeben, so daß aus den Gasräumen keine unter Überdruck stehenden Gase in die Umgebung austreten können.

In Figur 5 ist das Zusammenwirken zweier Einzelzellen bei einer Stapelung schematisch im Querschnitt dargestellt; dabei sind nur zwei der insgesamt vier Gasdurchführungen (41, 43) sichtbar. Die positive Polplatte (26) der linken Zelle hat um die vier Durchführungen jeweils ringförmig direkten mechanischen und elektronischen Kontakt mit der negativen Polplatte (21) der rechten Zelle. Damit sind die beiden Zellen elektrisch in Serie geschaltet. Zwischen den Zellen verbleibt ein Zwischenraum (51), der von einem Kühlmittel in beliebig wählbarer Richtung durchströmt werden kann. Die außerordentlich gute Zugänglichkeit dieses Zwischenraumes erweist sich insbesondere bei direkter Luftkühlung als vorteilhaft, außerdem können die Strömungswiderstände sehr niedrig gehalten werden. Beim Einsatz in Kraftfahrzeugen reicht deshalb bei Teillast der Fahrtwind zur Abführung der Verlustwärme aus, ansonsten ist nur ein kleines Zusatzgebläse mit geringem Energieverbrauch erforderlich.

Sämtliche Durchführungen in den Polplatten sind mit einer ringförmig ausgebildeten Dichtlippe umgeben. Die erhabenen Durchführungen besitzen eine Dichtlippe (52) mit einem relativ kleinen Durchmesser, die flachen Durchführungen sind jeweils von einer Dichtlippe (53) mit einem etwas größeren Durchmesser umgeben. Bei der Stapelung drücken jeweils eine Dichtlippe (53) der einen Zelle und eine Dichtlippe (52) der Nachbarzelle konzentrisch zueinander auf die Membran, wobei jeweils ein Stützring (56) als mechanisches Widerlager dient. Dadurch werden beide Betriebsgase am Austritt in die Umgebung gehindert. Sollte - durch einen Fehler oder Defekt - dennoch ein Gasaustritt erfolgen, so wird das Gas bei (54) direkt in die Umgebung abgeleitet, weil der ringförmige Zwischenraum zwischen den beiden konzentrischen Dichtbereichen über einen engen Spalt mit der Umgebung in Verbindung steht. Ein Übertritt in die Polplatte der Nachbarzelle ist - ähnlich wie bei der Randdichtung - auch hier nicht möglich. Die Austrocknung der Membran wird durch eine enge Ausbildung des Spaltes bei (54) verhindert.

Wie in Figur 5 dargestellt, kann die Umgebung der Durchführungen die Form eines stumpfen Kegels aufweisen. Die einzelnen Zellen sind somit zueinander zwangsgeführt, wodurch der Stapelvorgang erheblich vereinfacht wird. Diese Zellbereiche können aber auch stecker- oder druckknopfartig ausgebildet sein. Dadurch wird ein besserer elektrischer Kontakt und darüber hinaus ein mechanischer Verbund der Zellen untereinander erreicht.

Die Polplatten können zusätzlich mit Erhöhungen (55) versehen sein, die beispielsweise warzenartig ausgebildet sind. Diese Erhöhungen können, speziell bei großflächigen Zellen, drei Funktionen übernehmen: sie können die Gesamtstabilität der Batterie erhöhen, beispielweise die Rüttelfestigkeit; ferner können sie die innere Pressung der Zellen erhöhen, was abhängig von der Auswahl der Elektrodenmaterialien und der Betriebsdrücke erforderlich sein kann; außerdem kann dadurch die Länge der Stromwege in den Polplatten verkürzt werden.

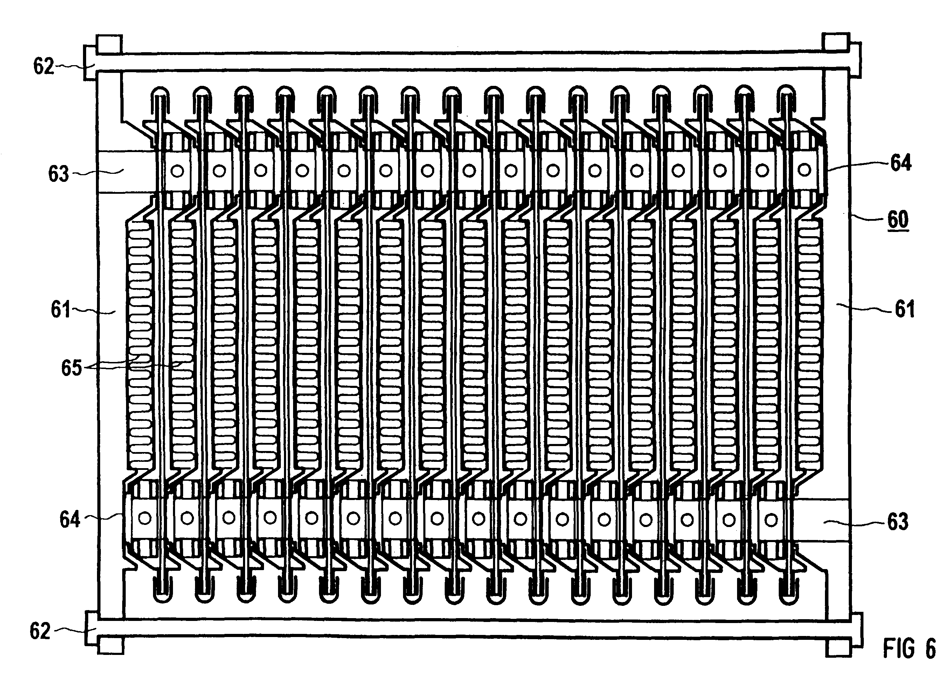

Zum Aufbau einer Brennstoffzellenbatterie wird - entsprechend der gewünschten Spannung - eine bestimmte Anzahl von Zellen nach der Erfindung in der beschriebenen Weise aufeinandergestapelt. In Figur 6 ist eine 16zellige Batterie (60) schematisch im Querschnitt dargestellt. Die Versorgungs- und Entsorgungsöffnungen liegen deckungsgleich aufeinander und bilden somit je zwei durchgehende Versorgungs- und Entsorgungskanäle für alle Zellen. Diese Kanäle können - unabhängig voneinander - auf der rechten oder linken Batterieseite an die Versorgungs- und Entsorgungseinrichtungen angeschlossen werden. Die nicht benötigten Öffnungen können nachträglich verschlossen werden oder es werden entsprechend geschlossene Endzellen verwendet.

Der erforderliche Dichtungsdruck an den Verbindungsstellen wird durch eine allen Zellen gemeinsame Spannvorrichtung erzeugt, beispielsweise in Form von Endplatten (61) und Schraubenbolzen (62). Die Schraubenbolzen können, wie in Figur 6 dargestellt, außen am Zellpaket entlanggeführt werden, sie können aber auch durch spezielle Bohrungen bzw. Aussparungen in den Zellen oder auch durch die Versorgungs- und Entsorgungsöffnungen geführt werden. Im Gegensatz zur Filterpressentechnik kann die Spannvorrichtung relativ einfach, leicht und billig ausgeführt werden, da die weit höhere Kräfte erfordernden Randdichtungen der Zellen bereits durch die Rahmenelemente bewirkt werden.

Die Ver- bzw. Entsorgung der Batterie erfolgt durch Bohrungen (63) in den Endplatten (61). Wie Figur 6 zeigt, kann durch eine den Einzelzellen entsprechende Formgebung der Endplatten erreicht werden, daß auch an diesen Stellen keine zusätzlichen Dichtungen erforderlich sind, weil dann die Membranen der Endzellen eine Abdichtung bewirken. Werden Endzellen verwendet, die bei (64) geschlossen sind, so ist für die gesamte Batterie kein Dichtungsmaterial erforderlich.

Die äußere Oberfläche der Polplatten wird vorteilhaft in der Weise ausgestaltet, daß sich zwischen den einzelnen Zellen Spalte und Hohlräume ergeben, die von einem flüssigen oder gasförmigen Kühlmedium durchströmt werden können. Wie bereits ausgeführt, können bei der Flüssigkeitskühlung - bei hohen Batteriespannungen - Korrosionsprobleme elektrochemischer Natur auftreten, die - mit akzeptablem Aufwand - nicht dauerhaft gelöst werden können. Das beschriebene Batteriedesign ist deshalb in erster Linie für eine direkte Luftkühlung konzipiert. Die Batterie nach der Erfindung ist auch deshalb für eine direkte Luftkühlung besonders geeignet, weil die gesamte Oberfläche der Zellen leicht zugänglich ist und ohne Überwindung von Engstellen, wie Kanäle und Bohrungen, vom kühlenden Luftstrom erreicht werden kann.

Die Wärmeübertragung von den Zellen auf die Kühlluft wird wesentlich erleichtert, wenn die Oberfläche der Zellen mit Kühlrippen versehen ist; dadurch läßt sich die wirksame Oberfläche um den Faktor 10 und mehr vergrößern. Praktisch kann dies in sehr einfacher Weise dadurch erreicht werden, daß zwischen je zwei Zellen Zwischenelemente (65) angeordnet werden, wie dies in Figur 6 dargestellt ist (Erhöhungen (55) sind in diesem Fall nicht vorhanden). Die Zwischenelemente (65) können gewellte oder geprägte Bleche sein, sie können aber auch aus verwebtem, verflochtenem oder verstricktem Draht bestehen, d.h. aus Drahtgeflechten. Die Zwischenelemente können auch jeweils fest mit einer der beiden Polplatten verbunden sein; vorteilhaft besitzen die Zwischenelemente Federeigenschaften.

Die Zwischenelemente erstrecken sich nicht über die gesamte Zelloberfläche, vielmehr bleiben die Dichtflächen für die Durchführungen in direktem Kontakt miteinander. Diese Durchführungen werden durch eine stärkere Ausprägung weiter aus den Polplatten herausgezogen, so daß der für die Zwischenelemente benötigte Platz geschaffen wird. Dadurch ergeben sich zusätzlich wesentliche Erleichterungen für den Gas- und Wassertransport innerhalb der Zellen. Die Dicke der Stützringe wird größer und damit kann auch der Strömungswiderstand der darin enthaltenen Radialkanäle erheblich herabgesetzt werden, weil er umgekehrt proportional zur vierten Potenz des Kanaldurchmessers ist. Außerdem wird der Kapillardruck von Wasser geringer. Dadurch sinkt auch die Gefahr, daß Kanäle durch Wassertröpfchen verschlossen werden.

Bei Membranbrennstoffzellen besteht das Problem, daß für eine funktionsfähige Zelle zwar nur eine Gesamtdicke von weniger als 1 mm nötig ist, sich innerhalb dieser dünnen Schicht aber keine Reaktantendurchführungen mit einem ausreichend geringen Strömungswiderstand realisieren lassen, welche auch sicher vor Verstopfungen durch kleine Partikel sind. Bei den Brennstoffzellen nach der Erfindung ist beispielsweise bei einer mittleren Zelldicke von 4 mm ein Kanaldurchmesser von 3 mm möglich, wobei 3 mm der Schichtdicke zweckmäßigerweise für die direkte Luftkühlung genutzt werden, so daß kein wertvoller Raum verschwendet wird.

Die Zwischenelemente können auch andere Funktionen übernehmen. So können sie zusätzliche elektrische Verbindungen für die elektrische Serienschaltung der Zellen schaffen, so daß die Stromwege kürzer und damit die Spannungsverluste geringer werden, was abhängig von der Größe der Zellen und der elektronischen Leitfähigkeit der Zellen wichtig sein kann. Zum anderen können die Zwischenelemente die gegenseitige Abstützung der Zellen verbessern, so daß die Polplatten aus extrem dünnen Blechen gefertigt werden können; hierbei tritt dann eine Bruttogewichtsersparnis ein.

Sämtliche Teile der Brennstoffzellen nach der Erfindung können durch Prägen und Stanzen aus Halbzeugen hergestellt werden. Dies sind Arbeitsgänge, die nur Bruchteile einer Sekunde erfordern. Auch die Montage ist außerordentlich schnell und einfach durchführbar, so daß die Voraussetzungen für eine Massenproduktion erfüllt sind. Auch sind spätere Reparaturen durch Austausch defekter Zellen auf sehr einfache Weise möglich. Wegen der freien Zugänglichkeit können ferner fehlerhaft arbeitende Zellen sehr einfach durch Spannungsmessungen oder Lecktests erkannt werden. Batterien aus Brennstoffzellen nach der Erfindung sind somit sehr wartungsfreundlich.

## Patentansprüche

1. Brennstoffzellen, jeweils mit einer negativen Polplatte, einer negativen Elektrode, einer Membran, einer positiven Elektrode und einer positiven Polplatte mit je mindestens vier durchgehenden Versorgungs- bzw. Entsorgungsöffnungen, **dadurch gekennzeichnet**, daß die negative Polplatte (21), die Membran (24) und die positive Polplatte (26) am Rand durch ein Rahmenelement (28) mechanisch fest, gasdicht und elektronisch isolierend miteinander verbunden sind, wobei kein zusätzliches Dichtungsmaterial vorhanden ist.

2. Brennstoffzellen nach Anspruch 1, **dadurch gekennzeichnet**, daß das Rahmenelement (28) einen U-Profil-Querschnitt besitzt, wobei die beiden U-Schenkel von außen gegen die beiden Polplatten (21 und 26) drücken.

3. Brennstoffzellen nach Anspruch 1 oder 2, **dadurch gekennzeichnet** daß das Rahmenelement (28) einen Gasableitkanal (20) besitzt, der mindestens an einer Stelle mit der Umgebung in Verbindung steht.

4. Brennstoffzellen nach einem der Ansprüche 1 bis 3, **dadurch gekennzeichnet**, daß das Rahmenelement (28) aus Metall besteht und daß zusätzlich eine elektronisch isolierende Schicht (29) vorhanden ist.

5. Brennstoffzellen nach Anspruch 4, **dadurch gekennzeichnet**, daß die elektronisch isolierende Schicht (29) als Beschichtung mindestens einer der beiden Polplatten (21, 26) ausgebildet ist.

6. Brennstoffzellen nach einem der Ansprüche 1 bis 5, **dadurch gekennzeichnet**, daß das Rahmenelement (28) Bestandteil einer der beiden Polplatten (21, 26) ist und die andere Polplatte am Rand umfaßt.

7. Brennstoffzellen nach einem oder mehreren der Ansprüche 1 bis 6, **dadurch gekennzeichnet**, daß die negative Polplatte (21) und die positive Polplatte (26) an den Außenseiten in der Weise mit einander entsprechenden Erhöhungen und Vertiefungen (42, 44) versehen sind, daß bei Stapelung mehrerer Brennstoffzellen deren Lage zueinander fixiert ist.

8. Brennstoffzellen nach einem oder mehreren der Ansprüche 1 bis 7, **dadurch gekennzeichnet**, daß die Polplatten (21 und 26) in der unmittelbaren Umgebung der Versorgungs- und Entsorgungsöffnungen (31, 35, 36, 37) geometrisch in der Weise ausgebildet sind, daß sich bei Stapelung zweier Brennstoffzellen zusammen mit der Membran einer der beiden Brennstoffzellen zwei ringförmige konzentrische Dichtbereiche ergeben.

9. Brennstoffzellen nach Anspruch 8, **dadurch gekennzeichnet**, daß der ringförmige Zwischenraum zwischen den beiden konzentrischen Dichtbereichen über einen engen Spalt mit der Umgebung in Verbindung steht.

10. Brennstoffzellenbatterien aus elektrisch in Serie geschalteten Brennstoffzellen, **dadurch gekennzeichnet**, daß sie aus einem Stapel von mehreren mechanisch miteinander verbundenen Brennstoffzellen nach einem oder mehreren der Ansprüche 1 bis 9 bestehen.

11. Brennstoffzellenbatterien nach Anspruch 10, **dadurch gekennzeichnet** , daß die Brennstoffzellen durch eine Spannvorrichtung (61, 62) miteinander verbunden sind.

12. Brennstoffzellenbatterien nach Anspruch 10 oder 11, **dadurch gekennzeichnet**, daß zwischen den Brennstoffzellen Zwischenräume für ein Kühlmedium, insbesondere Luft, vorhanden sind.

13. Brennstoffzellenbatterien nach einem der Ansprüche 10 bis 12, **dadurch gekennzeichnet**, daß zwischen den Brennstoffzellen jeweils ein zusätzliches Element (65) angeordnet ist, das die mechanische Abstützung der Brennstoffzellen gegeneinander und/oder die Stromübertragung zwischen den einzelnen Brennstoffzellen verbessert und/oder die thermische Kontaktfläche zum Kühlmedium vergrößert.

## Revendications

1. Cellules électrochimiques comprenant chacune une joue magnétique négative, une électrode négative, une membrane, une électrode positive et une joue magnétique positive pourvues chacune d'au moins quatre orifices d'alimentation ou d'élimination continus, caractérisées en ce que, au bord, par un élément en cadre (28), la joue magnétique négative (21), la membrane (24) et la joue magnétique positive (26) sont reliées mécaniquement entre elles, de manière fixe, étanche au gaz et isolante électroniquement, sans matériaux d'étanchéité additionnels.

2. Cellules électrochimiques selon la revendication 1, caractérisées en ce que l'élément en cadre (28) possède une section en profilé en U, les deux branches en U appuyant de l'extérieur contre les deux joues magnétiques (21 et 26).

3. Cellules électrochimiques selon la revendication 1 ou 2, caractérisées en ce que l'élément en cadre (28) possède un canal d'échappement de gaz (20) qui communique avec l'environnement à au moins un endroit.

4. Cellules électrochimiques selon l'une des revendications 1 à 3, caractérisées en ce que l'élément en cadre (28) est en métal et en ce que, en outre, une couche électroniquement isolante (29) est prévue.

5. Cellules électrochimiques selon la revendication 4, caractérisées en ce que la couche électroniquement isolante (29) est réalisée sous forme de revêtement de l'une au moins des deux joues magnétiques (21, 26).

6. Cellules électrochimiques selon l'une des revendications 1 à 5, caractérisées en ce que l'élément en cadre (28) fait partie de l'une des deux joues magnétiques (21, 26) et entoure l'autre joue magnétique au bord.

7. Cellules électrochimiques selon l'une ou plusieurs des revendications 1 à 6, caractérisées en ce que, sur les côtés extérieurs, la joue magnétique négative (21) et la joue magnétique positive (26) sont pourvues de reliefs et de creux (42, 44) correspondant l'un à l'autre, de sorte que leur position l'un par rapport à l'autre est fixée lorsque plusieurs cellules électrochimiques sont empilées.

8. Cellules électrochimiques selon l'une ou plusieurs des revendications 1 à 7, caractérisées en ce que, dans l'environnement direct des orifices d'alimentation et d'élimination (31, 35, 36, 37), les joues magnétiques (21 et 26) sont réalisées géométriquement de façon telle que l'on obtient lorsque deux cellules électrochimiques sont empilées, ensemble avec la membrane de l'une des deux cellules électrochimiques, deux zones d'étanchéité concentriques annulaires.

9. Cellules électrochimiques selon la revendication 8, caractérisées en ce que l'espace annulaire entre les deux zones d'étanchéité concentriques communique avec l'environnement par l'intermédiaire d'une fente étroite.

10. Batteries de cellules électrochimiques constituées de cellules électrochimiques montées en série électriquement, caractérisées en ce qu'elles sont composées d'une pile de plusieurs cellules électrochimiques reliées entre elles mécaniquement selon l'une ou plusieurs des revendications 1 à 9.

11. Batteries de cellules électrochimiques selon la revendication 10, caractérisées en ce que les cellules électrochimiques sont reliées entre elles par un dispositif de serrage (61, 62).

12. Batteries de cellules électrochimiques selon la revendication 10 ou 11, caractérisées en ce que des espaces pour un produit réfrigérant, en particulier l'air, sont prévus entre les cellules électrochimiques.

13. Batteries de cellules électrochimiques selon l'une des revendications 10 à 12, caractérisées en ce qu'un élément additionnel (65) est disposé à chaque fois entre les cellules électrochimiques, qui améliore l'appui mécanique des cellules électrochimiques l'une contre l'autre et/ou améliore la transmission de courant entre les cellules électrochimiques et/ou augmente la surface de contact thermique pour le produit réfrigérant.

## Claims

1. Fuel cells, each having a negative pole flange, a negative electrode, a membrane, a positive electrode and a positive pole flange with, in each case, at least four uninterrupted supply and discharge apertures, characterised in that the negative pole flange (21), the membrane (24) and the positive pole flange (26) are connected to one another at the edge in mechanically rigid, gas-tight and electronically insulating manner by means of a frame element (28), no additional sealing material being present.

2. Fuel cells according to Claim 1, characterised in that the frame element (28) has a U-shaped cross-section, the two sides of the U pressing from the outside against the two pole flanges (21 and 26).

3. Fuel cells according to Claim 1 or 2, characterised in that the frame element (28) has a gas-drainage channel (20) which is in communication with the environment at least at one point.

4. Fuel cells according to one of Claims 1 to 3, characterised in that the frame element (28) is made of metal and in that an electronically insulating layer (29) is additionally present.

5. Fuel cells according to Claim 4, characterised in that the electronically insulating layer (29) takes the form of a coating of at least one of the two pole flanges (21, 26).

6. Fuel cells according to one of Claims 1 to 5, characterised in that the frame element (28) is an integral part of one of the two pole flanges (21, 26) and encompasses the other pole flange at the edge.

7. Fuel cells according to one or more of Claims 1 to 6, characterised in that the negative pole flange (21) and the positive pole flange (26) are provided on their outsides with mutually corresponding elevations and depressions (42, 44) in such a manner that when several fuel cells are stacked their location in relation to one another is fixed.

8. Fuel cells according to one or more of Claims 1 to 7, characterised in that the pole flanges (21 and 26) are formed geometrically in the immediate vicinity of the supply and discharge apertures (31, 35, 36, 37) in such a manner that when two fuel cells are stacked together with the membrane of one of the two fuel cells two annular concentric sealing regions are formed.

9. Fuel cells according to Claim 8, characterised in that the annular interspace between the two concentric sealing regions is in communication with the environment via a narrow gap.

10. Fuel-cell batteries consisting of fuel cells electrically connected in series, characterised in that said batteries consist of a stack of several fuel cells according to one or more of Claims 1 to 9 which are mechanically connected to one another.

11. Fuel-cell batteries according to Claim 10, characterised in that the fuel cells are connected to one another by means of a clamping device (61, 62).

12. Fuel-cell batteries according to Claim 10 or 11, characterised in that interspaces for a cooling medium, in particular air, are present between the fuel cells.

13. Fuel-cell batteries according to one of Claims 10 to 12, characterised in that an additional element (65) is arranged in each instance between the fuel cells which improves the mechanical support of the fuel cells in relation to one another and/or the transfer of current between the individual fuel cells and/or enlarges the surface in thermal contact with the cooling medium.
